# EUROPÄISCHE PATENTANMELDUNG

(11) **EP 1 430 944 A1**
(43) Veröffentlichungstag der Anmeldung: **23.06.2004**
(21) Anmeldenummer: 03027653.9
(22) Anmeldetag: 03.12.2003
(51) Int. Cl.: B01D 59/44, G01N 1/00

(54) **Verfahren und Vorrichtung zur Freisetzung von Sauerstoffisotopen aus sauerstoffhaltigen Feststoffen**

(30) Priorität: 19.12.2002 DE 10260119
(71) Anmelder: FORSCHUNGSZENTRUM JÜLICH GMBH, 52425 Jülich (DE)
(72) Erfinder: Schleser, Gerhard, Prof. Dr., 41238 Mönchengladbach (DE); Knörchen, Wolfgang, 52457 Aldenhoven (DE)

(57) **Zusammenfassung**

Die Erfindung betrifft ein Verfahren zur Freisetzung von Sauerstoffisotopen aus sauerstoffhaltigen Feststoffen insbesondere aus biogenen und abiogenen silikatischen Substanzen beziehungsweise Feststoffen sowie eine für die Durchführung des Verfahrens geeignete Vorrichtung. Erfindungsgemäß wird die Probe zur Freisetzung des im Silikat enthaltenen Sauerstoffes mit Glaskohlenstoff in Kontakt gebracht, indem die Probe in einer Probenkammer (17) aus Glaskohlenstoff induktiv erhitzt wird. Die Probenkammer (17) befindet sich in einer Glaskohlenstoffkammer (5), die gasdicht gegenüber der Umgebung abgeschlossen ist, wobei das bei der Reaktion freiwerdende CO oder CO₂ für den Zweck der Analyse abgeführt werden kann.

## Beschreibung

Die Erfindung betrifft ein Verfahren zur Freisetzung von Sauerstoffisotopen aus sauerstoffhaltigen Feststoffen insbesondere aus biogenen und abiogenen silikatischen Substanzen beziehungsweise Feststoffen sowie eine für die Durchführung des Verfahrens geeignete Vorrichtung.

In der Paläoklimatologie und der Paläothermometrie besteht Interesse an der Feststellung der in Feststoffproben vorhandenen Verhältnisse der Sauerstoffisotope ¹⁶O und ¹⁸O.

Aus dem Werk "Stable Isotope Geochemistry" von J.Hoefs 4^{th} Completely Revised, Ubdated, and Enlaged Edition; Springer Berlin, Heidelberg, New York, Barcelona Budapest, Hong Kong 1997 sind verschiedene Methoden zur Freisetzung von Sauerstoff aus Proben bekannt. So werden nach dem Stand der Technik zu untersuchende silikatische Proben von Feststoffen durch Laserbestrahlung verdampft, wobei Sauerstoff freigesetzt und der Analyse zugänglich gemacht wird. Der Sauerstoff kann und wird vielfach direkt massenspektroskopisch auf seine Isotope untersucht. Alternativ kann der Sauerstoff in einer weiteren Reaktion mit Kohlenstoff in CO oder CO₂ überführt werden. Die Ermittlung des Isotopenverhältnisses erfolgt dann durch massenspektroskopische Untersuchung des durch Reaktion mit Graphit entstandenen CO oder CO₂.

Ein Weiteres, bei Silikaten und Oxiden häufig zum Einsatz kommendes Verfahren, basiert auf der Fluorinierung der Substanzen, deren Sauerstoffisotope analysiert werden sollen. Dabei wird der Sauerstoff mittels F₂ oder BrF₅ in Nickelzylindern bei 500-600 °C freigesetzt. Der Sauerstoff wird danach im allgemeinen an heißem Graphit in CO₂ überführt und anschließend der massenspektroskopischen Messung zugeführt. Vielfach erfordern die zu untersuchenden Proben eine Vorreinigung, weil die Analyse störende Fremdmoleküle oder Gruppen in die Probe eingelagert sind. So enthalten z. B. biogene Silikate, wie Schalen von Diatomeen, vielfach Wasser oder OH-Gruppen die eine analytische Sauerstoffisotopenbestimmung stark erschweren. Soll daher eine Analyse betreffend der Isotopenzusammensetzung des Sauerstoffes vorgenommen werden, so muß die Probe zunächst in vorgeschalteten Reinigungsschritten von Fremdstoffen beziehungsweise Molekülen befreit werden, welche das Analyseergebnis verfälschen können. Eine Methode zur Freisetzung von Sauerstoff aus den zu untersuchenden Proben ist die Laserverdampfung partieller Bereiche von Festkörpern. Bei dieser Methode ist eine, wenn auch geringe, Fraktionierung, das heißt eine Verschiebung des Sauerstoffisotopenverhältnisses der zu analysierenden Probe des Festkörpers, nicht zu vermeiden, die durch die etwas anderen Bedingungen in den Randbereichen des Verdampfungsvorgangs begründet sind. Die Erhitzung der Feststoffprobe durch Laser hat darüber hinaus im Hinblick auf die Reproduzierbarkeit beziehungsweise die Repräsentativität des Ergebnisses von größeren Proben erhebliche Nachteile, denn mit dem Laserstrahl werden lediglich punktuelle Bereiche der gesamten Feststoffprobe erhitzt und damit der Isotopenanalyse zugänglich gemacht. Bei Inhomogenitäten einer Probe ist somit das Ergebnis der zugehörigen Messung des Verhältnisses der Sauerstoffisotope nicht unbedingt repräsentativ für die gesamte Probe. Um repräsentative Ergebnisse zu erlangen sind daher mehrere Messungen notwendig, deren Ergebnisse gemittelt werden müssen.

Die deutsche Patentanmeldung DE 199 06 732 A1 offenbart ein Verfahren und eine Vorrichtung zur Freisetzung von Sauerstoffisotopen, aus sauerstoffhaltigen Feststoffen, bei denen sauerstoffhaltige Feststoffe mit Graphit in Kontakt gebracht werden, wodurch CO und CO₂ entsteht.

Es ist die Aufgabe der Erfindung, ein Verfahren und eine Vorrichtung zu schaffen, mit denen Sauerstoffisotope aus Silikaten, vor allem biogenen Silikaten zur Bestimmung der Sauerstoffisotopenverhältnisse quantitativ extrahiert werden können. Das Verfahren und die Vorrichtung sollen eine Kontamination mit Fremdsauerstoff, der nicht durch sequentielle vorherige Entfernung aus den zu untersuchenden Proben abstammt, verhindern, damit das Isotopenverhältnis der Sauerstoffisotope unverfälscht bestimmt werden kann.

Ausgehend vom Oberbegriff des Anspruchs 1 wird die Aufgabe gelöst mit den im kennzeichnenden Teil des Anspruchs 1 angegebenen Merkmalen.

Mit der erfindungsgemäßen Vorrichtung und dem Verfahren ist es möglich, Kontaminationen des aus den zu untersuchenden Proben freigesetzten Sauerstoffes mit Fremdsauerstoff, insbesondere aus Austauschreaktionen mit Sauerstoff aus Quarzglas, welches als äußere Wandung des Behälters dient, zu verhindern. Eine Vorpräparation der Proben ist wegen der eingesetzten Technik einer sequentiellen Aufheizung mit gleichzeitigem Abpumpen von Fremdstoffen bei ca. 1000°C nicht notwendig.

Vorteilhafte Weiterbildungen der Erfindung sind in den Unteransprüchen angegeben.

Die Zeichnung zeigt eine beispielhafte Ausführungsform der erfindungsgemäßen Vorrichtung.

Es zeigt:

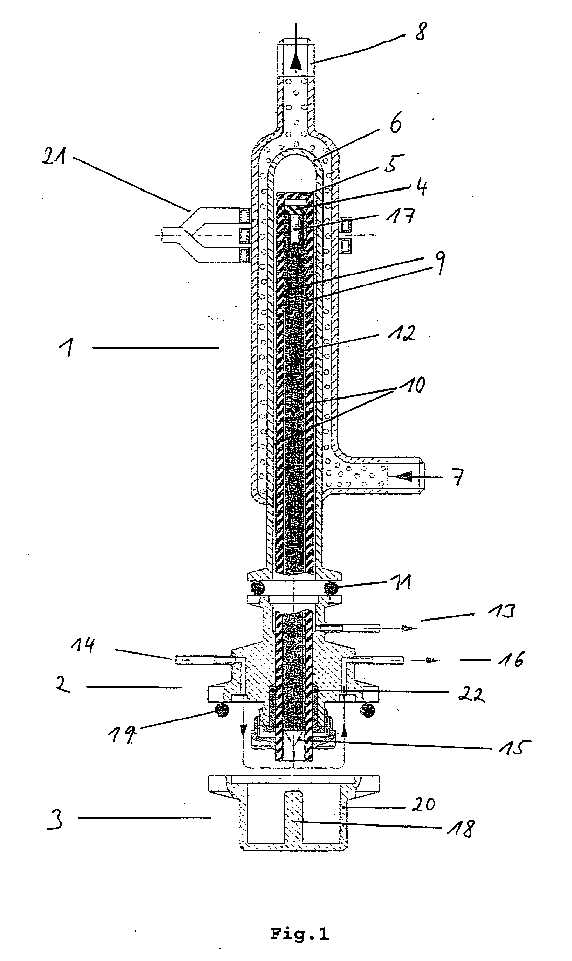

- Fig.1:: Eine erfindungsgemäße Vorrichtung.

Figur 1 zeigt eine erfindungsgemäße Vorrichtung mit einem Modul 1, in dem sich ein Probenhalter 12 befindet, der in seinem oberen Bereich eine Probenkammer 17 besitzt. Probenhalter 12 und Probenkammer 17 sind vorzugsweise einteilig ausgebildet. Auf der Probenkammer 17 befindet ich ein Deckel 4. Der Probenhalter 12 sowie die Probenkammer 17 befinden sich mit dem Deckel 4 in einer Glaskohlenstoffkammer 5, die in dieser Ausführungsform zylinderförmig ausgebildet ist. Die Glaskohlenstoffkammer 5 umschließt den Probenhalter 12 und die Probenkammer 17, wobei in diesem Ausführungsbeispiel zwei Nuten entlang der Glaskohlenstoffkammer 5 bestehen. Diese Nuten dienen als Gasableitungssystem 9 für CO/CO₂. Diese Gasführung 9 für CO/CO₂ kann in verschiedener Weise ausgestaltet sein. So kann es sich um eine Einkerbung handeln, welche sich entlang der Längsachse des Probenhalters 12 erstreckt. In der dargestellten Ausführungsform sind zwei gegenüber liegende Nuten des Probenhalters 12 abgeschnitten, so daß ein Freiraum zwischen dem Probenhalter 12 und Glaskohlenstoffkammer 5 besteht, in dem aus der Probenkammer 17 austretendes CO entweichen kann. Jedenfalls handelt es sich bei allen denkbaren Ausführungsformen um Mittel zum Abführen von CO/CO₂ aus der Probenkammer 17. Der Probenhalter 12, die Probenkammer 17 und die Glaskohlenstoffkammer 5 befinden sich in einer Vakuumkammer 6. In dieser Ausführungsform ist die Vakuumkammer 6 eine doppelwandig ausgebildete Quarzkammer, welche die Glaskohlenstoffkammer 5 umschließt und in deren Hohlraum Kühlflüssigkeit, bevorzugt Wasser, über einen Einlaß 7 und einen Auslaß 8 geführt wird. In Höhe der Probenkammer 17 wird die Quarzkammer von einer Induktionsspule 21 umschlossen. Dieses Modul 1, welches den Probenhalter 12 mit der Probenkammer 17 enthält, ist über eine Dichtung 11 mit einem Modul 2 verbunden. Da der Probenhalter 12 mit der Probenkammer 17 länger ist als die Vakuumkammer 6, die mit ihren Ausgestaltungen das Modul 1 darstellt, tritt der Probenhalter 12 aus dem Modul heraus und befindet sich mit einem Teil in Modul 2. Modul 2 besitzt einen Vakuumanschluß 13, welcher zum Evakuieren der Vakuumkammer 6 dient. Das sich in der Vakuumkammer 6 befindende Gas wird dann über den Bereich 10 der Vakuumkammer 6 abgesaugt. Es kann über eine Schnellkupplung vakuumdicht mit Modul 1 verbunden werden. Weiterhin umfaßt das Modul 2 einen Trägergaseinlaß 14 beispielsweise für Helium, sowie einen Ausgang 16, welcher das aus der Probenkammer 17 kommende CO entlang der Nutenführung 9 nach unten zum einem CO-Auslaß 15 leitet und dort das austretende CO und/oder CO₂-Gas mit dem aus dem Trägergaseinlaß 14 eintretenden Trägergas weiteren Vorrichtungsbestandteilen zuführt. Diese weiteren Vorrichtungsbestandteile können ein Iosotopenmassenspektrometer (sogenannter online Betrieb) oder ein Probenröhrchen mit einem Molekularsieb sein (offline Betrieb), in dem das freiwerdende CO kondensiert werden kann. Der Ausgang 16 dient auch zum Abpumpen von Verunreinigungen die vor dem eigentlichen Aufschluß der Probe durch ein angeschlossenes Vakuumsystem entfernt werden kann. Im Ausgangsbereich wird die Glaskohlenstoffkammer 5 durch eine Dichtung 22 abgedichtet, damit kein CO in den Bereich der Vakuumkammer 6 eintreten kann, damit die Meßergebnisse nicht verfälscht werden. Insbesondere kann so kein Kontakt zwischen dem durch die Reaktion entstehenden CO oder CO₂ und dem Quarzglas der Vakuumkammer 6 entstehen, wodurch ein Sauerstoffisotopenaustausch verhindert wird. Die Aufteilung der Bestandteile in Modul 1 und Modul 2 entspricht nur einer beispielhaften Ausgestaltung der erfindungsgemäßen Vorrichtung, da die über die Dichtung verbundenen Module 1 und 2 auch als eine Einheit ausgebildet sein können. In der zweiteiligen und einteiligen Ausführungsform kann der Vakuumanschluß 13 auch an einer anderen Stelle angebracht sein.

Auf das Modul 2 ist ein Modul 3 beispielsweise als Kappe anbringbar, welches gegenüber dem Modul 2 durch eine Dichtung 19 abgedichtet wird. Es umfaßt als Mittel zum Positionieren und Fixieren einen Stift 18, welcher in die Glaskohlenstoffkammer 5 eingreift und den Probenhalter 12 positioniert bzw. fixiert. Das Modul 3 bildet im Inneren einen kleinen Hohlraum aus, durch den das vom Trägergaseinlaß 14 kommende Helium und das durch den CO-Auslaß 15 austretende CO oder CO₂ zum Ausgang 16 überführt werden kann.

Erfindungsgemäß bestehen die Probenkammer 17 sowie der fakultativ verwendbare Deckel 4 aus Glaskohlenstoff. Der Probenhalter 12 besteht vorzugsweise aus Glaskohlenstoff, insbesondere in dem an die Probenkammer 17 anschließenden Bereich, da dort die höchsten Temperaturen herrschen. Glaskohlenstoff ist reiner Kohlenstoff, welcher keramische Eigenschaften besitzt und beispielsweise durch thermischen Abbau eines räumlich vernetzten Kunstharzes hergestellt werden kann. Beispielhaft kann das Material mit der Bezeichnung Sigradur® verwendet werden. Es ist auch jedes Material aus Kohlenstoff einsetzbar, welches gleiche Eigenschaften besitzt und dabei keinen Sauerstoff enthält oder bindet oder keinen Sauerstoff enthält oder bindet, der durch Erhitzung an die Umgebung abgegeben werden kann.

Bei Betrieb wird die Probenkammer 17, welche sich am Kopfteil des Probenhalters 12 befindet mit einer Probe beschickt, deren Bestandteile auf die Zusammensetzung bezüglich der Sauerstoffisotope in Silikaten, vorzugsweise biogenen Silikaten untersucht werden soll.

Die Verwendung des Deckels 4 hat den Vorteil, daß die Probe bei ihrer Erhitzung nicht verspritzt. Der Deckel 4 sitzt dabei so locker, daß sich CO, welches sich bei der Erhitzung der Probe in Verbindung mit dem Glaskohlenstoffe der Probenkammer 17 bildet, entweichen kann. Erfindungsgemäß kann die Silikatprobe ohne vorherige Aufreinigung, das heißt zum Beispiel durch Desorption von Wasser oder OH⁻Gruppen in der Probenkammer 17, der Aufheizung durch die Induktionsspule 21 ausgesetzt werden. Hierbei erhitzt sich der Probenhalter 12 mit der Probenkammer 17 was zu einer gleichzeitigen Aufheizung der Silikatprobe führt. Die Temperatur kann nun langsam gesteigert werden wobei die Aufheizung manuell oder programmierbar erfolgen kann. Bei einer Temperatur von ca. 100-120 °C kann Wasser desorbiert werden, welches über die Vakuumleitung 16 abgesaugt wird. Durch weitere Temperatursteigerung können weitere Verunreinigungen fraktioniert abdampfen. Auch die Entfernung organischer Reste biogener Silikate ist nicht erforderlich, da diese bei der sequentiellen Aufheizung im Bereich von 500-600°C zersetzt und über den Auslaß 16 abgepumpt werden können. Bei einer Temperatur von ca. 1000°C werden alle eingelagerten OH⁻-Gruppen abgetrennt. Weiterhin können stickstoffhaltige Verbindungen ausgetrieben werden, welche die spätere Analyse aufgrund des Molekulargewichtes von N₂ quantitativ beeinträchtigen und verfälschen können. Bei Temperaturen von ca. 1300-1400°C sind die Verunreinigungen quantitativ abgetrennt und nach automatischer Trennung vom Vakuumsystem führt eine weitere Steigerung der Temperatur sukzessive dazu, daß Silikat Sauerstoff abspaltet, welcher mit dem Glaskohlenstoff der Probenkammer 12 zu CO reagiert. Die Aufheizung kann problemlos bis zu einer Temperatur von 2200 °C durchgeführt werden. Bei diesen experimentellen Bedingungen wird praktisch sämtliches SiO₂ in CO überführt. Das Vorliegen von CO hat gegenüber CO₂ den Vorteil, daß das CO als zu analysierender Stoff zu einer doppelt so hohen Empfindlichkeit bezüglich der Massenspektrometrie führt, als CO₂. Weiterhin ist der Aufschluß zu CO kürzer, so daß Arbeitszeit gespart wird. Daher wird bevorzugt eine induktive Erhitzung auf hohe Temperaturen vorgenommen, bei denen das Bouduard-Gleichgewicht auf der Seite des CO liegt. Alternativ kann das durch die Reaktion des Sauerstoffes mit dem Glaskohlenstoff der Probenkammer 17 entstehende CO auch durch Temperaturabsenkung aufgrund des Bouduard-Gleichgewichtes in CO₂ überführt werden. Dieses kann dann in einer Kühlfalle mit flüssigem Stickstoff auskondensiert werden. Im allgemeinen, vor allem im Routinebetrieb, wird das CO₂ jedoch wie CO im Helium-Trägergasstrom, welcher durch die Heliumleitung 14 eingeführt wird, zum Massenspektrometer transportiert. Das Verfahren ist bei allen Sauerstoff enthaltenden Feststoffen anwendbar, unabhängig davon, ob sie in Pulverform, amorpher Masse, als Kristall oder sonstiger fester Form vorliegen.

Die Möglichkeit der kontinuierlichen Aufheizung von Probenmaterial gestattet die Vorreinigung und Abtrennung der Substanzen von unerwünschten Fremdstoffen bzw. Molekülen durch fraktionierte Desorption oder Abspaltung. Hierbei wird eine Verfälschung des Ausgangsverhältnisses der Sauerstoffisotope weitgehend verhindert, da im Gegensatz zur chemischen Aufarbeitung kein Austausch der Sauerstoffatome der Feststoffprobe mit Sauerstoffatomen von Reagenzien stattfindet.
Bei Gemischen, die unterschiedliche Zersetzungstemperaturen bzw. Schmelz- oder Verdampfungstemperaturen besitzen, kann eine sequentielle Sauerstoffisotopenbestimmung der unterschiedlichen Komponenten des Gemisches durchgeführt werden.

In einer alternativen Ausführungsform des erfindungsgemäßen Verfahrens wird die zu analysierende bzw. freizusetzende Probe am zu untersuchenden Feststoff, zusätzlich mit Graphitpulver vermischt und dieses Gemisch induktiv erhitzt. Hierdurch läßt sich die Reaktion beschleunigen. Das Gemisch kann gegebenenfalls festgepreßt werden. Bei dieser Verfahrensweise findet eine Reaktion der Probe sowohl mit dem Glaskohlenstoff der Probenkammer 17 als auch mit dem Graphit statt.

Der Graphit soll für die analytischen Zwecke hoch rein sein, so daß keine Verfälschung der Analysenergebnisse durch Verunreinigungen stattfinden kann. Bevorzugt ist die Verwendung von Spektralgraphit der Zusatzbestandteile, welcher lediglich eine Konzentration von unter 20 ppm mit Si <2ppm, Ca <1ppm, B <1ppm, Fe <0,5ppm, Ti <0,5ppm aufweist. Je nach den nachgeschalteten Analysenverfahren, welches nicht auf Massenspektrometrie beschränkt ist kann die geforderte Reinheit jedoch auch nach unteren Werten abweichen.

Mit dem erfindungsgemäßen Verfahren können größere Feststoffmengen von beispielsweise 500 µg in einem Experiment aufgeschlossen und analysiert werden. Somit wird das Ergebnis repräsentativer und unterliegt keinen Fehlern, die aus der Heterogenität der Probe resultieren, da bei der Messung die gesamte Probe verwertet wird. Es können daher zeitaufwendige Wiederholungsmessungen gespart werden.

Beim Erhitzen der Probe in der Probenkammer 17 mittels der Induktionsspule 21 entsteht in der oben angegebenen Weise CO und/oder CO₂ durch den Kontakt der Probe mit dem Glaskohlenstoff der Probenkammer 17. Im Folgenden wird bei dem Reaktionsprodukt immer von CO gesprochen, auch wenn bei der Reaktion CO₂ entstehen kann, was bei dieser Formulierung immer als Möglichkeit mit eingeschlossen sein soll. Das CO entweicht aus der Probenkammer 17 gegebenenfalls über den aufgesetzten Deckel 4 der fakultativ verwendet werden kann, um ein Verspritzen von Probe oder Graphit zu verhindern. Die Glaskohlenstoffkammer 5 umschließt die Probenkammer 17 und schirmt somit den Reaktionsraum in der Probenkammer 17 gegenüber der Umgebung ab. Dies hat den Vorteil, daß das freigesetzte CO, welches die Isotopen des in der Probe vorhandenen Sauerstoffes beinhaltet nicht durch Isotopenaustausch mit Sauerstoff aus Wandmaterialien, welche Sauerstoff enthalten, in seiner Zusammensetzung verfälscht werden kann. Da die Probenkammer 17 aus Glaskohlenstoff besteht, kann sie keinen ungewünschten Austausch von Sauerstoffisotopen bewirken, so daß sie keine Störquelle darstellt. Bei den Vorrichtungen nach dem Stand der Technik, wie beispielsweise in der 199 06 732 A1 konnte ein Kontakt des CO mit der Glaswand der Vorrichtung entstehen, wodurch ein Austausch von Sauerstoffisotopen des CO mit der Glaswand stattfinden konnte. Demgegenüber ist die erfindungsgemäße Vorrichtung so ausgestaltet, daß dieser Nachteil vermieden wird. Weiterhin wird die Vakuumkammer 6 evakuiert, wodurch der Druck in der Vakuumkammer 6 minimiert wird. Hierdurch wird eine starke Gasexpansion aufgrund der hohen Temperatur und somit eine Explosion verhindert. Während des Betriebs wird die Vorrichtung wenigstens im Bereich der Induktionsspule 21 gekühlt. Der Probenhalter 12 sowie die Probenkammer 17 sind vorzugsweise länglich ausgebildet und haben eine Länge von vorzugsweise ca. 17 cm, damit sich bei der starken Erhitzung ein Temperaturgradient ausbilden kann, der im unteren Bereich zu einer niedrigeren Temperatur führt.

### Ausführungsbeispiel:

Die (Hochtemperaturzelle) HTZ ist aus drei Moduleinheiten aufgebaut (Fig.1)

Moduleinheit 1: Sie besteht aus einer doppelwandigen Vakuumkammer 6 aus Spezialglas (Vicor), welche nur geringe Neigung zum Austausch seiner Sauerstoffisotope mit Sauerstoffisotopen anderer Materialien besitzt, vor allem bei höheren Temperaturen. Die Doppelwandigkeit dient dem Durchsetzen von Kühlflüssigkeit zur Abfuhr der Strahlungswärme.

### Aufbau der Hochtemperaturzelle (HTZ)

Das zur Verwendung kommende Hochtemperaturaufschlußverfahren kann silikatische Proben bei Temperaturen bis ca. 2200°C zu Kohlenstoffmonoxid umsetzen. Die zentrale Einheit besteht aus einem zylindrischen Gehäuse aus Glaskohlenstoff in die ein zylindrischer Stab (Probenhalter) aus dem gleichen Material nach Entfernung von Modul 3 von unten eingeführt werden kann (Fig.1). Eine Aussparung im oberen Teil des Probenhalters dient als Probenkammer, die durch einen Deckel aus Glaskohlenstoff geschlossen werden kann. Der Probenhalter besitzt längsseitig von oben nach unten verlaufend zwei gegenüberliegende Nuten zur Ableitung der bei der Pyrolyse entstehenden Gase. Diese Einheit ist an einen festen Block (Modul 2 der Fig.1.) gekoppelt, der die Sigradurkammer fixiert und die nach unten abgeführten Gase entweder online mittels Helium als Trägergas in ein Massenspektrometer oder vakuumgetrieben in ein mit flüssigem Stickstoff gekühltes Probenröhrchen mit Molekularsieb überführen kann. Der untere Ausgang der Sigradurkammer wird durch eine Kappe verschlossen (Modul 3 der Fig.1.), die einerseits die richtige Positionierung des Probenhalters gewährleistet und andererseits die Sigradurkammer gasdicht nach außen verschließt. Die Sigradurkammer ist luftdicht in einen doppelwandigen Quarzglaszylinder integriert, der an die Moduleinheit 2 angeflanscht werden kann. Der als Kühleinheit verwendete doppelwandige Quarzglaszylinder dient der Evakuierung der Umgebung der Sigradurkammer und zur Abführung der Strahlungswärme, die bei der induktiven Heizung der Sigradurkammer erzeugt wird. Durch diese Maßnahmen wird eine Zersetzung des Glaskohlenstoffs während der Heizphase, bei der extrem hohe Temperaturen erreicht werden, vermieden.

Die Evakuierung der Vakuumkammer erfolgt getrennt von dem Innenbereich der Sigradurkammer in der die Zersetzung der Proben stattfindet. Dazu ist ein Vakuumauslaß im oberen Bereich der Moduleinheit 2 vorhanden, der direkt zu einer Vakuumpumpe führt. Mittels dieser Konstruktion wird verhindert, daß es in der heißen Verbrennungszone zu einem Sauerstoffisotopenaustausch zwischen dem freigesetzten CO-Gas, dessen Sauerstoffisotope zu messen sind, und dem Quarzglas kommt. Die Evakuierung der Vakuumkammer erfolgt getrennt von dem Innenbereich der Sigradurkammer, in der die Zersetzung der Proben stattfindet. Die Aufheizung des Systems auf die jeweils erforderliche Temperatur erfolgt mittels Induktions-heizung durch einen Mittelfrequenzgenerator (Hüttinger, TIG 10/300). Die Temperatur der Sigradurkammer kann mit einem Generator stufenlos geregelt werden.

Der gesamte Extraktionsprozeß, von der Evakuierung der Probenkammer über den graduellen Aufheizprozeß zur Entfernung von Fremdkomponenten bis zur Zersetzung des biogenen Materials wird elektronisch über einen PC gesteuert. Außerdem kann die Moduleinheit 3 durch einen Multiport ersetzt werden, um im Online-Modus eine größere Anzahl von Proben automatisch aufschließen und analysieren zu können.

Die Abmessungen der einzelnen Komponenten der Moduleinheiten, wobei es primär auf die frei verfügbaren Volumina ankommt, sind beispielsweise wie folgt gegeben:

In die Probenkammer wird eine Mischung (1:0,8) aus Probenmaterial (z. B. Diatomeenschalen) und Graphitpulver (letzteres als stöchiometrischer C-Überschuß) eingewogen. Die Probenkammer wird anschließend mit einem Deckel aus Sigradurmaterial verschlossen. Damit wird Materialverlust bei besonders heftigen Reaktionen vermieden. Der Probenhalter wird anschließend in die Sigradurkammer eingeführt (Fig. 1) und mittels Modul 3 vakuumdicht verschlossen. Nachfolgend wird das System auf ein Vakuum von <10⁻³mbar evakuiert, wobei Sigradurkammer und Vakuumkammer getrennte Vakuumsysteme besitzen. Die Vakuumkammer besitzt ein eigenes Pumpsystem und steht nicht mit dem Reaktionsraum in Verbindung. Dadurch ist gewährleistet, daß eine Oxidation des Glaskohlenstoffs durch Luft vermieden wird. Über eine computergesteuerte schrittweise Aufheizung des Probenhalters erfolgt die Probenvorpräparation und der Aufschluß des Materials. In einer ersten raschen Aufheizphase, die zunächst bis 650°C und dann weiter bis ca. 850°C verläuft, werden OH-Gruppen und Wasser desorbiert sowie Reste organischen Materials thermisch zu CO und in geringem Maße zu CO₂ zersetzt. Diese Produkte werden sofort bis zur Druckstabilität (<10⁻³mbar) abgepumpt. Um anschließend den Aufschluß des biogenen Siliziums durchzuführen, wird die HTZ durch Schließen eines hydropneumatischen Ventils von der zugehörigen Vakuumeinheit getrennt und die Temperatur des Probenhalters weiter schrittweise bis auf ca. 1550°C erhöht. Der aus dem Silikat freiwerdende Sauerstoff setzt sich mit dem Graphit zu Kohlenstoffmonoxid (CO) um. Darüber hinaus entsteht als zweite Verbindung Siliziumcarbid, welches sich als Feststoff niederschlägt. Bei einer Einwaage von 1,0 - 1,5mg biogenem Silikat entsteht in der HTZ ein Gasdruck von bis zu 16-18mbar. Diese relativ große Gasmenge wird z. Z. benötigt, da die Isotopenmessung gegenwärtig noch offline an einem Massenspektrometer mittels Doppeleinlaßsystem erfolgt. Das beim Aufschluß entstehende Gas (CO) strömt innerhalb der Sigradurkammer, entlang der zwei im Probenhalter befindlichen Nuten, nach unten weg. In der gegenwärtigen Ausführung wird das CO über einen speziellen Auslaß (s. Abb.1, Auslaß an Moduleinheit 2, →a) in ein mittels flüssigem Stickstoff gekühltes Probenröhrchen, welches ein Molekularsieb von 5Å enthält, auf <5*10⁻²mbar einkondensiert. Dies entspricht einer Ausbeute von mehr als 99,5% CO.

## Patentansprüche

1. Vorrichtung zur Freisetzung von Sauerstoff aus Silikaten umfassend eine Probenkammer für die Aufnahme von einer Probe sowie eine Induktionsheizung
**dadurch gekennzeichnet,**
**daß** die Probenkammer (17) aus Glaskohlenstoff besteht, welche sich in einer Glaskohlenstoffkammer (5) befindet, die gasdicht gegenüber der Umgebung abgeschlossen ist sowie Mittel zum Abführen von durch die Erhitzung gebildeten CO bzw. CO₂.

2. Vorrichtung nach Anspruch 1,
**dadurch gekennzeichnet,**
**daß** die Probenkammer (17) durch einen Glaskohlenstoffdeckel (4) abgedeckt ist.

3. Vorrichtung nach einem der Ansprüche 1 oder 2,
**dadurch gekennzeichnet,**
**daß** die Probenkammer (17) und die Glaskohlenstoffkammer (5) länglich und ineinander passend ausgebildet sind, wobei die Probenkammer (17) in einen Probenhalter (2) übergeht und in die Glaskohlenstoffkammer (5) einschiebbar ist, wobei im wesentlichen entlang der Längsachse des Probenhalters ein gasdurchlässiger Bereich als Gasauslaß für CO/CO₂ existiert.

4. Vorrichtung nach einem der Ansprüche 1 bis 3,
**dadurch gekennzeichnet,**
**daß** sich die Glaskohlenstoffkammer (5) in einer Vakuumkammer (6) befindet, welche einen Vakuumanschluß (13) besitzt.

5. Vorrichtung nach Anspruch 4,
**dadurch gekennzeichnet,**
**daß** die Vakuumkammer (6) als doppelwandiges Kühlungsgefäß mit einem Kühlmitteleingang (7) und einem Kühlmittelausgang (8) ausgebildet ist.

6. Vorrichtung nach einem der Ansprüche 1 bis 5,
**dadurch gekennzeichnet,**
**daß** die Vakuumkammer (6) mit dem Kühlmitteleingang (7) und dem Kühlmittelausgang (8) als modularer Baustein (1) ausgebildet ist.

7. Vorrichtung nach einem der Ansprüche 1 bis 6,
**dadurch gekennzeichnet,**
**daß** die Gasführung (9) für CO,CO₂ in einen Auslaß (15) mündet, von wo aus CO, CO₂ mittels eines Trägergases, welches durch den Trägergaseinlaß (14) aufgegeben wird, abtransportiert werden kann.

8. Vorrichtung nach einem der Ansprüche 1 bis 7,
**dadurch gekennzeichnet,**
**daß** der Auslaß (15) mit einem Auslaß (16) in Verbindung steht, der mit einer Auffangvorrichtung von CO mit einem Molekularsieb und/oder einem Isotopenmassenspektrometer in Verbindung steht.

9. Vorrichtung nach einem der Ansprüche 1 bis 8,
**dadurch gekennzeichnet,**
**daß** der Trägergaseinlaß (14) sowie der Gasausgang für Luft (13) und einen Ausgang (16) für das bei dem Probenaufschluß entstehende CO zu einem Modul (2) zusammengefaßt sind.

10. Vorrichtung nach einem der Ansprüche 1 bis 9,
**dadurch gekennzeichnet,**
**daß** sie über eine Kappe (20) zum vakuumdichten Anschluß des Auslasses (15) verfügt.

11. Vorrichtung nach Anspruch 10,
**dadurch gekennzeichnet,**
**daß** die Kappe (20) über einen Stift (18) verfügt, welcher in die Glaskohlenstoffkammer (5) eingreift und den Probenhalter (2) stützt und/oder zentriert.

12. Vorrichtung nach einem der Ansprüche 1 bis 11,
**dadurch gekennzeichnet,**
**daß** sie Kühlmittel umfaßt.

13. Vorrichtung nach einem der Ansprüche 1 bis 12,
**dadurch gekennzeichnet,**
**daß** sie über eine Dichtung (22) verfügt, welche den CO oder CO₂-führenden Bereich der Glaskohlenstoffkammer (5) gegenüber dem Quarzglas abdichtet.

14. Verfahren zur Bestimmung der Verhältnisse der Sauerstoffisotope in Silikaten, bei dem das Silikat mit Kohlenstoff unter Erhitzung in Kontakt gebracht wird, wobei sich CO und/oder CO₂ bildet, welches einer Isotopenanalyse zugeführt wird,
**dadurch gekennzeichnet,**
**daß** die Probe in einer sauerstofffreien Umgebung
mit Glaskohlenstoff in Kontakt gebracht wird.

15. Verfahren nach Anspruch 14
**dadurch gekennzeichnet,**
**daß** die Aufheizung in Vakuum erfolgt.

16. Verfahren nach einem der Ansprüche 14 oder 15,
**dadurch gekennzeichnet,**
**daß** das bei der Aufheizung des Silikates entstehende CO oder CO₂ isoliert wird.

17. Verfahren nach einem der Ansprüche 14 bis 16,
**dadurch gekennzeichnet,**
**daß** das CO oder CO₂ einem Analyseverfahren zugeführt wird.

18. Verfahren nach Anspruch 17,
**dadurch gekennzeichnet,**
**daß** das Analyseverfahren ein massenspektroskopisches Verfahren ist.

19. Verfahren nach einem der Ansprüche 14 bis 18,
**dadurch gekennzeichnet,**
**daß** eine Aufheizung auf 1600 bis 2200 °C vorgenommen wird.

20. Verfahren nach einem der Ansprüche 14 bis 19,
**dadurch gekennzeichnet,**
**daß** die Aufheizung sequentiell unter Austreibung von Verunreinigungen wie Wasser durchgeführt wird.

21. Verfahren nach einem der Ansprüche 14 bis 20,
**dadurch gekennzeichnet,**
**daß** ein biogenes Silikat verwendet wird.
